# EUROPEAN PATENT SPECIFICATION

(11) **EP 4 075 376 B1**
(45) Date of publication and mention of the grant of the patent: **30.10.2024**
(21) Application number: 21382311.5
(22) Date of filing: 13.04.2021
(51) Int. Cl.: G06T 11/00, G06N 3/045, G06N 3/047, G06N 3/048, G06N 3/082, G06T 5/60, G06T 5/77

(54) **METHOD FOR OBTAINING AN IMAGE WITH A RESTORED OBJECT**
VERFAHREN ZUR ERZEUGUNG EINES BILDES MIT WIEDERHERGESTELLTEM OBJEKT
PROCÉDÉ D'OBTENTION D'UNE IMAGE CONTENANT UN OBJET RESTAURÉ

(43) Date of publication of application: 19.10.2022
(73) Proprietor: Fundación Universidad Francisco de Vitoria, 28223 Pozuelo de Alarcón (ES)
(72) Inventor: GARCÍA TEJEDOR, Álvaro José, Pozuelo de Alarcón (ES); NOGALES MOYANO, Alberto, Pozuelo de Alarcón (ES); DELGADO MARTOS, Emilio, Pozuelo de Alarcón (ES)
(74) Representative: TRBL Intellectual Property

(56) References cited:
- CAO JIANFANG ET AL: "Ancient mural restoration based on a modified generative adversarial network", HERITAGE SCIENCE, 29 January 2020 (2020-01-29), London, pages 1 - 14, XP055844213, Retrieved from the Internet <URL:https://heritagesciencejournal.springeropen.com/track/pdf/10.1186/s40494-020-0355-x.pdf> [retrieved on 20210923], DOI: 10.1186/s40494-020-0355-x
- ISOLA PHILLIP ET AL: "Image-to-Image Translation with Conditional Adversarial Networks", 2017 IEEE CONFERENCE ON COMPUTER VISION AND PATTERN RECOGNITION (CVPR), IEEE COMPUTER SOCIETY, US, 21 July 2017 (2017-07-21), pages 5967 - 5976, XP033249958, ISSN: 1063-6919, [retrieved on 20171106], DOI: 10.1109/CVPR.2017.632
- AITHAL BHARATH HARIDAS ET AL: "Urban 3D Structure Reconstruction Through a Generative Adversarial Network Model", ARABIAN JOURNAL FOR SCIENCE AND ENGINEERING, vol. 45, no. 12, 18 August 2020 (2020-08-18), pages 10731 - 10741, XP037304273, ISSN: 2193-567X, DOI: 10.1007/S13369-020-04850-7

## Description

### TECHNICAL FIELD

This invention belongs to the field of image processing, and more particularly, to reconstructing ruined objects contained in a complete image.

### STATE OF THE ART

In recent years, virtual reconstruction techniques for archaeological remains have been oriented in a preferential way to visually restore three-dimensional models.

Documents like "Generative Adversarial Networks for Single Photo 3D Reconstruction", by Kniaz et al, explore different techniques for obtaining a three-dimensional model, able to be edited by a computer program, from a plurality of photographs obtained from the real buildings.

However, these studies do not provide any method for reconstructing the buildings within the image, since they are aimed to the provision of a three-dimensional model out of bidimensional images.

Further, some work has been also done on image inpainting. Kriging models based on statistics were used by Keaomanee, Heednacram and Young Kong (2020), where the input image presented a black patch requiring filling to complete the image. Li et al. (2020) developed a hybrid module using Recurrent Feature Reasoning and Knowledge Consistent Attention to fill large and continuous holes in images. These two previous works applied image inpainting with classical techniques instead of deep learning, which were the models used in our study.

However, all these works need to be fed with marked zones, where the missing objects need to be supplied.

Cao Jianfang et al "Ancient mural restoration based on a modified generative adversarial network" (Heritage Science, XP055844213, London) proposes a way of restoring bidimensional murals by using a generative adversarial network. Each layer performs different steps, including the extraction of deep image features and authenticity checking.

A solution for reconstructing damaged buildings withing complete images without it being necessary to specifically state which areas of the image to complete and how these areas should be completed is therefore sought.

### DESCRIPTION OF THE INVENTION

The invention provides a solution for this problem by means of a method according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for obtaining an image with a restored object as defined in claim 1.

This method comprises two main stage: the training stage and the processing stage. The training stage comprises the first three steps of the defined method (providing the training dataset, providing the generative adversarial network (GAN) architecture and training the GAN) and the processing stage comprises the use of the trained GAN to transform a first bidimensional image (comprising a ruined object) into a second bidimensional image (which comprises the reconstructed object).

Compared with the state of the art, the present invention provides a method which is able to infer which elements are missing or partially missing in the first bidimensional image and in which location should these elements be placed. There is no need to mark the first bidimensional image, contrary to the known inpainting methods. Further, the elements to be added are not inferred from the same first bidimensional image, contrary to the known inpainting methods.

This method is limited to the provision of a first image and the obtention of a second image which has the same size as the first image, since the machine learning is focused on identifying the missing elements and the location in the bidimensional image.

In any case, the method uses complete images, without any black patches or marks that could help the system to identify the zones with missing elements. The GAN is trained to identify both the elements and the locations where these elements should be completed. But the method does not restore the image itself, but the ruined building which is within the image.

Due to the fact of training the GAN with a training dataset comprising pairs of images, the pairs comprising two images of the same building (one restored and one partially ruined), the GAN learns to identify in the processing stage which elements are missing and the location where these elements should be placed.

In some particular embodiments, the training dataset comprises images grouped in different buildings, so that, for each building, the training data set comprises at least 10 different pair of images, each pair being obtained varying the perspective.

By feeding the training dataset with different perspectives of the same building, the GAN is trained to work in different perspectives. For example, for the same building, images are taken each 20 degrees, until completing the whole 360 degree range. For each 20 degrees, both the completed-building image and the ruined-building image are provided.

In some particular embodiments, at least part of the images of the training dataset have been created by a computer aided design program.

A computer aided design program may be used to create some of the images, since, in some cases, there is not a real picture for the restored building.

According to the invention, the step of training the generative adversarial network comprises
that a first group of pairs of images of the training dataset are used for a direct training of the generative adversarial network, where the first training image is used as an input and the second training image is used as an output
that this first group of pairs of images of the training data set are used for a segmented training of the generative adversarial network, where the first training image is used as an input together with a segmented image, comprising an identification of different architectonic elements of the first training image.

For example, the segmented training uses images in which each architectonic element of the building is referenced with a colour. These images are used alongside images with the complete temples as a training guide to identify the architectonical missing elements, but in any case, there are no missing pixels. With this process, the GAN is trained to identify each type of element, and learn the location of them inside the building. The segmented training is used so that in the processing stage, there is no need to mark the first bidimensional image in any way.

In some particular embodiments, the step of training the generative adversarial network comprises
using the generator network of the generative adversarial network to perform a training process and using the discriminator network to evaluate if an output image corresponds to the output of the generator network or to a training image
evaluating the generative adversarial network by applying binary-cross entropy, providing a numerical value of the similarity between the output image and the training image
iteratively updating the parameters of the generator network and the parameters of the discriminator network with each pair of images of the training dataset, until the discriminator network cannot distinguish between the output image and the training image.

With these steps, the accuracy is improved, taking advantage of the GAN structure, applied to this particular case.

In some particular embodiments, the step of processing the first bidimensional image by the generative adversarial network comprises
adapting the size of the first bidimensional image to the size of the training dataset
normalizing the adapted image to a pixel map, wherein the colour of each pixel is normalized to a value of a normalization range, such as [-1, 1]
dividing the normalized data in three-dimensional arrays, wherein each three-dimensional array has the same size; and
operating the generative adversarial network to obtain an image with the restored building.

This way of operating the first bidimensional image is especially advantageous for being processed by a generative adversarial network architecture.

In some particular embodiments, the generative adversarial network comprises
an input block
a plurality of convolutional blocks, comprising a bidimensional convolutional layer, a batch normalization layer and leaky ReLU as the activation function with an slope of 0.2, wherein the first three convolutional blocks has an increasing number of neurons and the rest of the blocks have the same number of neurons as the third convolutional block
a plurality of deconvolutional blocks, comprising a transposed bidimensional convolutional layer, a batch normalization layer, a dropout layer and leaky ReLU as the activation function, wherein the last four blocks has an decreasing number of neurons and the rest of the blocks have the same number of neurons as the fourth block starting by the end.

In particular embodiments, the input block has 64 neurons, the first convolutional block has 128 neurons, the second convolutional block has 256 network and the third to seventh convolutional blocks have 512 neurons.

This structure is especially adapted to the analysis of bidimensional images, thus providing the best result in terms of machine learning.

In some particular embodiments, the discriminator network comprises
a first input layer intended to represent an image from the training dataset and a second input layer intended to represent an output image from the generator network
a concatenation layer for mixing the first input layer and the second input layer
a plurality of convolutional blocks, comprising a bidimensional convolutional layer, a batch normalization layer and leaky ReLU as the activation function, wherein the convolutional blocks have an increasing number of neurons;
a bidimensional convolutional layer with a sigmoidal activation function and a filter of 4x4 with stride 1
an output layer comprising a matrix of values which evaluate the possibility that the output image from the generator network corresponds to an image of the training dataset.

The output layer provides a way of evaluating the quality of the image created by the generator network in a zone-by-zone basis. Each pixel of the matrix of values provides an evaluation of the quality of the building reconstruction in one of the zone (pillars, frontispiece, capitals,...). Due to the fact that the method does not work with marked images or patches, this output layer provides an advantageous zone evaluator.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The scope of the invention and its embodiments is defined by the appended claims. The drawings comprise the following figures:
Figure 1 shows a general approach of a method for providing an image with a restored temple according to the invention.
Figure 2 shows an example of a pair of images used in a method according to the invention.
Figures 3a and 3b show a detailed view of some steps of the training stage of a particular embodiment of a method according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

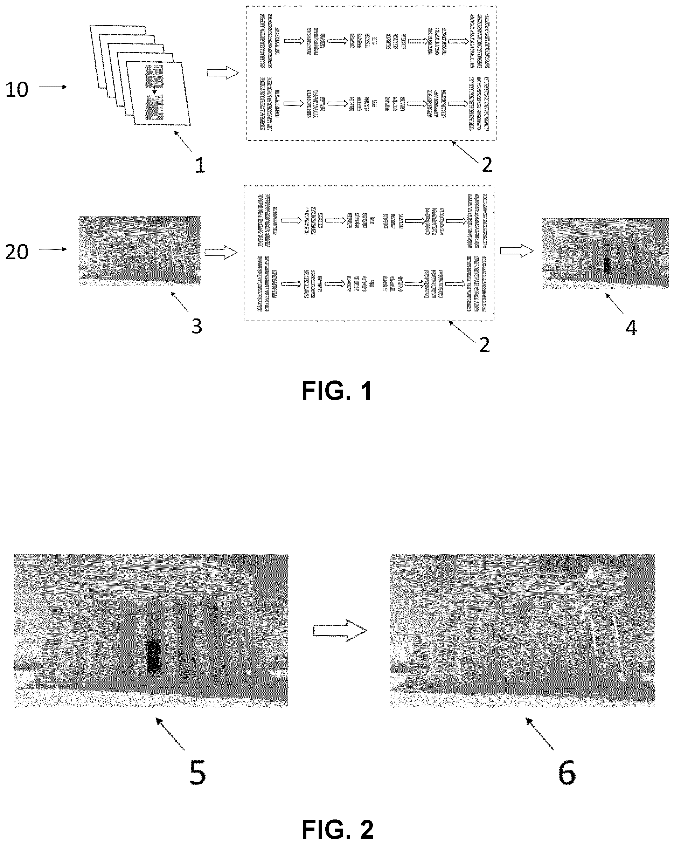

Figure 1 shows a general approach of a method for providing an image with a restored temple according to the invention. This method has two main stages: the training stage and the processing stage. This method is particularly applied to Doric-style Greek temples.

The training stage 10, which is done only once, comprises the steps of
providing a training dataset 1
providing a generative adversarial network architecture 2
training the generative adversarial network 2 with the training dataset 1 and performing a machine learning process from the training dataset.

The processing stage 20, which may be done as many times as required, comprises the following steps
providing the generative adversarial network with a first bidimensional image 3 comprising a Greek temple in a ruined state
processing the first bidimensional image by the generative adversarial network 2
obtaining a second bidimensional image 4 of the same size as the first bidimensional image, the second bidimensional image 4 comprising a restored version of the Greek temple.

In the training stage 10, the training dataset 1 comprises pairs of training images, each pair comprising a first training image with a complete building and a second training image, with the same building in a ruined state.

The training dataset is classified by the type of temples. For each particular temple, the training data set comprises 18 different pair of images, each pair being obtained each 20 degrees, until completing the whole 360 degree range. For each 20 degrees there is one pair of images, one with the restored temple and one with the ruined temple. By feeding the training dataset with different perspectives of the same building, the GAN is trained to work in different perspectives.

Figure 2 shows an example of a pair of images. The left image 5 would be the image with the complete temple and the right image 6 would be the image with a partially ruined temple. As may be seen in this figure, both images are complete, there are not missing or deteriorated pixels.

These images of the training dataset have been created by a computer aided design program.

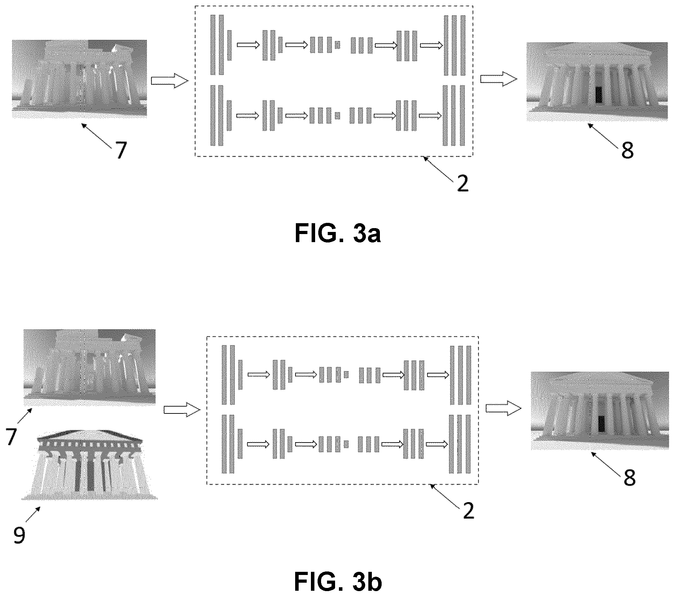

Figures 3a and 3b show detailed views of some steps of the training stage of a particular embodiment of a method according to the invention.

In these steps, a first group of images is chosen to perform a double type of training.

Figure 3a shows a first training, which is a direct training: the first training image 7 comprising the ruined temple is used as an input and a second training image 8 comprising the corresponding temple but completed is used as the output image.

Figure 3b shows a second training, which is a segmented training. In this case, the input comprises both the first training image 7 (comprising the ruined temple) and an additional training image 9 where the elements are marked in the completed temple. The output will be the second training image 8 with the complete temple as required.

The step of training the generator network comprises
perform a training process of the generator network using the discriminator network to evaluate if an output image corresponds to the output of the generator network or to a training image
evaluating the generator network by applying binary-cross entropy, providing a numerical value of the similarity between the output image and the training image
iteratively updating the parameters of the generator network and the parameters of the discriminator network with each pair of images of the training dataset, until the discriminator network cannot distinguish between the output image and the training image.

To train the generator network, a discriminator network such as the following one is used:
a first input layer intended to represent an image from the training dataset and a second input layer intended to represent an output image from the generator network
a concatenation layer for mixing the first input layer and the second input layer
a plurality of convolutional blocks, comprising a bidimensional convolutional layer, a batch normalization layer and leaky ReLU as the activation function, wherein the convolutional blocks have an increasing number of neurons;
a bidimensional convolutional layer with a sigmoidal activation function and a filter of 4x4 with stride 1
an output layer comprising a matrix of values which evaluate the possibility that the output image from the generator network corresponds to an image of the training dataset.

Once the generator network has been trained, as shown in the previous figures, the generator network is used to provide images with restored buildings.

When the input bidimensional image is received, the following steps are performed
the size of the input bidimensional image is adapted to the size of the training dataset, which in this case is 256x512
the adapted image is normalizing the adapted image to a pixel map, wherein the colour of each pixel is normalized to a value of a normalization range, such as [-1, 1]. The size of this normalized image is 256x512x3 (the last dimension is due to the RGB scale, one channel for each of the basic colours)
the normalized data is divided in three-dimensional arrays, wherein each three-dimensional array has the same size;
use each three-dimensional array in the input block of the generator network;
process the array with a plurality of convolutional blocks,
obtain the final bidimensional image by means of a plurality of deconvolutional blocks.

In this case, there are seven convolutional blocks, each one comprising a bidimensional convolutional layer, a batch normalization layer and leaky ReLU as the activation function with an slope of 0.2. The first three convolutional blocks have an increasing number of neurons (128, 256 and 512) and the rest of the blocks have all of them 512 neurons.

There are also seven deconvolutional blocks, each one comprising a transposed bidimensional convolutional layer, a batch normalization layer, a dropout layer and leaky ReLU as the activation function. The first three blocks have 512 neurons, while the last four blocks have a decreasing number of neurons (512, 256, 128, 64).

The restored version of the building is produced by the trained generator network which, due to the training steps, is enabled to identify elements to be added to the building and the location where these elements are added.

## Claims

1. Method for obtaining an image with a restored object, the method comprising the steps of
providing a training dataset with pairs of training images, each pair comprising a first training image with a complete building and a second training image, with the same building in a ruined state
providing a generative adversarial network architecture comprising a generator network and a discriminator network
training the generative adversarial network with the training dataset and performing a machine learning process from the training dataset
providing the generative adversarial network with a first bidimensional image comprising a building in a ruined state
processing the first bidimensional image by the generative adversarial network
obtaining a second bidimensional image of the same size as the first bidimensional image, the second bidimensional image comprising a restored version of the building, the restored version of the building being produced by the trained generative adversarial network which, due to the training steps, is enabled to identify elements to be added to the building and the location where these elements are added,
wherein the step of training the generative adversarial network comprises that
a first group of pairs of images of the training dataset are used for a direct training of the generator network, where the first training image is used as an input and the second training image is used as an output;
the method being **characterized in that**
this first group of pairs of images of the training data set are used for a segmented training of the generator network, where the first training image is used as an input together with a segmented image, comprising an identification of different architectonic elements of the first training image.

2. Method according to claim 1, wherein the training dataset comprises images grouped in different buildings, so that, for each building, the training data set comprises at least 10 different pair of images, each pair being obtained varying the perspective.

3. Method according to any of the preceding claims, wherein at least part of the images of the training dataset have been created by a computer aided design program.

4. Method according to any of the preceding claims, wherein the step of training the generative adversarial network comprises
Using the generator network to perform a training process and using a discriminator network to evaluate if an output image corresponds to the output of the generator network or to a training image
Evaluating the generative adversarial network by applying binary-cross entropy, providing a numerical value of the similarity between the output image and the training image
Iteratively updating the parameters of the generator network and the parameters of the discriminator network with each pair of images of the training dataset, until the discriminator network cannot distinguish between the output image and the training image.

5. Method according to any of the preceding claims, wherein the step of processing the first bidimensional image by the generative adversarial network comprises
Adapting the size of the first bidimensional image to the size of the training dataset
Normalizing the adapted image to a pixel map, wherein the colour of each pixel is normalized to a value of a normalization range, such as [-1, 1]
Dividing the normalized data in three-dimensional arrays, wherein each three-dimensional array has the same size
Operating the generator network to obtain an image with the restored building.

6. Method according to any of the preceding claims, wherein the generator network comprises
an input block
a plurality of convolutional blocks, comprising a bidimensional convolutional layer, a batch normalization layer and leaky ReLU as the activation function with an slope of 0.2, wherein the first three convolutional blocks has an increasing number of neurons and the rest of the blocks have the same number of neurons as the third convolutional block
a plurality of deconvolutional blocks, comprising a transposed bidimensional convolutional layer, a batch normalization layer, a dropout layer and leaky ReLU as the activation function, wherein the last four blocks has an decreasing number of neurons and the rest of the blocks have the same number of neurons as the fourth block starting by the end.

7. Method according to any of the preceding claims, wherein the discriminator network comprises
a first input layer intended to represent an image from the training dataset and a second input layer intended to represent an output image from the generator network
a concatenation layer for mixing the first input layer and the second input layer
a plurality of convolutional blocks, comprising a bidimensional convolutional layer, a batch normalization layer and leaky ReLU as the activation function, wherein the convolutional blocks have an increasing number of neurons;
a bidimensional convolutional layer with a sigmoidal activation function and a filter of 4x4 with stride 1
an output layer comprising a matrix of values which evaluate the possibility that the output image from the generator network corresponds to an image of the training dataset.

## Patentansprüche

1. Verfahren zum Erzeugen eines Bildes mit einem wiederhergestellten Objekt, wobei das Verfahren die folgenden Schritte umfasst:
Bereitstellen eines Trainingsdatensatzes mit Paaren von Trainingsbildern, wobei jedes Paar ein erstes Trainingsbild mit einem kompletten Gebäude und ein zweites Trainingsbild mit demselben Gebäude in einem ruinierten Zustand umfasst
Bereitstellen einer generativen gegnerischen Netzwerkarchitektur, umfassend ein Generatornetzwerk und ein Diskriminatornetzwerk
Trainieren des generativen gegnerischen Netzwerks mit dem Trainingsdatensatz und Durchführen eines maschinellen Lernverfahrens aus dem Trainingsdatensatz
Bereitstellen eines ersten zweidimensionalen, ein Gebäude in einem ruinierten Zustand umfassenden Bildes für das generative gegnerische Netzwerk
Verarbeiten des ersten zweidimensionalen Bildes durch das generative gegnerische Netzwerk
Erzeugen eines zweiten zweidimensionalen Bildes in derselben Größe wie das erste zweidimensionale Bild, wobei das zweite zweidimensionale Bild eine wiederhergestellte Version des Gebäudes umfasst, wobei die wiederhergestellte Version des Gebäudes durch das trainierte generative gegnerische Netzwerk erzeugt wird, das aufgrund der Trainingsschritte in der Lage ist, Elemente zu identifizieren, die dem Gebäude hinzugefügt werden sollen, sowie den Standort, an dem diese Elemente hinzugefügt werden,
wobei der Schritt des Trainierens des generativen gegnerischen Netzwerks umfasst, dass
eine erste Gruppe von Bildpaaren des Trainingsdatensatzes für ein direktes Training des Generatornetzwerks verwendet wird, wobei das erste Trainingsbild als eine Eingabe verwendet wird und das zweite Trainingsbild als eine Ausgabe verwendet wird;
wobei das Verfahren **dadurch gekennzeichnet ist, dass**
diese erste Gruppe von Bildpaaren des Trainingsdatensatzes für ein segmentiertes Training des Generatornetzwerks verwendet wird, wobei das erste Trainingsbild als Eingabe zusammen mit einem segmentierten Bild verwendet wird, umfassend eine Identifizierung unterschiedlicher architektonischer Elemente des ersten Trainingsbildes.

2. Verfahren gemäß Anspruch 1, wobei der Trainingsdatensatz Bilder umfasst, die in unterschiedlichen Gebäuden gruppiert sind, so dass der Trainingsdatensatz für jedes Gebäude mindestens 10 unterschiedliche Bildpaare umfasst, wobei jedes Paar durch Variieren der Perspektive erzeugt wird.

3. Verfahren gemäß einem der vorhergehenden Ansprüche, wobei mindestens ein Teil der Bilder des Trainingsdatensatzes durch ein computergestütztes Designprogramm erstellt wurde.

4. Verfahren gemäß einem der vorhergehenden Ansprüche, wobei der Schritt des Trainierens des generativen gegnerischen Netzwerks Folgendes umfasst:
Verwenden des Generatornetzwerks zum Durchführen eines Trainingsprozesses und Verwenden eines Diskriminatornetzwerks zum Bewerten, ob ein Ausgabebild der Ausgabe des Generatornetzwerks oder einem Trainingsbild entspricht
Bewerten des generativen gegnerischen Netzwerks durch Anwenden der binären Kreuzentropie, wobei ein numerischer Wert der Ähnlichkeit zwischen dem Ausgabebild und dem Trainingsbild bereitgestellt wird
Iteratives Aktualisieren der Parameter des Generatornetzwerks und der Parameter des Diskriminatornetzwerks mit jedem Bildpaar des Trainingsdatensatzes, bis das Diskriminatornetzwerk nicht mehr zwischen dem Ausgabebild und dem Trainingsbild unterscheiden kann.

5. Verfahren gemäß einem der vorhergehenden Ansprüche, wobei der Schritt des Verarbeitens des ersten zweidimensionalen Bildes durch das generative gegnerische Netzwerk Folgendes umfasst:
Anpassen der Größe des ersten zweidimensionalen Bildes an die Größe des Trainingsdatensatzes
Normalisieren des angepassten Bildes auf eine Pixelkarte, wobei die Farbe jedes Pixels auf einen Wert eines Normalisierungsbereichs, wie etwa [-1, 1], normalisiert wird
Aufteilen der normalisierten Daten in dreidimensionale Arrays, wobei jedes dreidimensionale Array die gleiche Größe hat
Betreiben des Generatornetzwerks, um ein Bild mit dem wiederhergestellten Gebäude zu erzeugen.

6. Verfahren gemäß einem der vorhergehenden Ansprüche, wobei das Generatornetzwerk Folgendes umfasst:
einen Eingabeblock
eine Vielzahl von Faltungsblöcken, umfassend eine zweidimensionale Faltungsschicht, eine Batch-Normalisierungsschicht und eine undichte ReLU als Aktivierungsfunktion mit einer Steigung von 0,2, wobei die ersten drei Faltungsblöcke eine zunehmende Anzahl von Neuronen aufweisen und die restlichen Blöcke die gleiche Anzahl von Neuronen wie der dritte Faltungsblock aufweisen
eine Vielzahl von Entfaltungsblöcken, umfassend eine transponierte zweidimensionale Faltungsschicht, eine Batch-Normalisierungsschicht, eine Ausfallschicht und eine undichte ReLU als Aktivierungsfunktion, wobei die letzten vier Blöcke eine abnehmende Anzahl von Neuronen aufweisen und die restlichen Blöcke die gleiche Anzahl von Neuronen wie der vierte Block aufweisen, beginnend am Ende.

7. Verfahren gemäß einem der vorhergehenden Ansprüche, wobei das Diskriminatornetzwerk Folgendes umfasst:
eine erste Eingabeschicht, die dazu bestimmt ist, ein Bild aus dem Trainingsdatensatz darzustellen, und eine zweite Eingabeschicht, die dazu bestimmt ist, ein Ausgabebild aus dem Generatornetz darzustellen
eine Verkettungsschicht zum Mischen der ersten Eingabeschicht und der zweiten Eingabeschicht
eine Vielzahl von Faltungsblöcken, umfassend eine zweidimensionale Faltungsschicht, eine Batch-Normalisierungsschicht und eine undichte ReLU als Aktivierungsfunktion, wobei die Faltungsblöcke eine zunehmende Anzahl von Neuronen aufweisen;
eine zweidimensionale Faltungsschicht mit einer sigmoidalen Aktivierungsfunktion und einem Filter von 4x4 mit Schrittweite 1
eine Ausgabeschicht, umfassend eine Matrix von Werten, die die Möglichkeit bewerten, dass das Ausgabebild von dem Generatornetzwerk einem Bild des Trainingsdatensatzes entspricht.

## Revendications

1. Procédé d'obtention d'une image contenant un objet restauré, le procédé comprenant les étapes consistant à
fournir un ensemble de données d'entraînement avec des paires d'images d'entraînement, chaque paire comprenant une première image d'entraînement avec un bâtiment complet et une deuxième image d'entraînement, avec le même bâtiment dans un état en ruine
fournir une architecture de réseau antagoniste génératif comprenant un réseau générateur et un réseau discriminateur
entraîner le réseau antagoniste génératif avec l'ensemble de données d'entraînement et réaliser un procédé d'apprentissage automatique à partir de l'ensemble de données d'entraînement
fournir au réseau antagoniste génératif une première image bidimensionnelle comprenant un bâtiment dans un état en ruine
traiter la première image bidimensionnelle par le réseau antagoniste génératif
obtenir une deuxième image bidimensionnelle de la même taille que la première image bidimensionnelle, la deuxième image bidimensionnelle comprenant une version restituée du bâtiment, la version restituée du bâtiment étant produite par le réseau antagoniste génératif entraîné qui, du fait des étapes d'entraînement, est capable d'identifier des éléments à ajouter au bâtiment et l'emplacement où ces éléments sont ajoutés,
dans lequel l'étape d'entraîner le réseau antagoniste génératif comprend le fait que
un premier groupe de paires d'images de l'ensemble de données d'entraînement sont utilisés pour un entraînement direct du réseau générateur, où la première image d'entraînement est utilisée comme entrée et la deuxième image d'entraînement est utilisée comme sortie ;
le procédé étant **caractérisé en ce que**
ce premier group de paires d'images de l'ensemble de données d'entraînement sont utilisées pour un entraînement segmenté du réseau générateur, où la première image d'entraînement est utilisée comme entrée conjointement avec une image segmentée, comprenant une identification d'éléments architectoniques différents de la première image d'entraînement.

2. Procédé selon la revendication 1, dans lequel l'ensemble de données d'entraînement comprend des images regroupées dans différents bâtiments, de sorte que, pour chaque bâtiment, l'ensemble de données d'entraînement comprend au moins 10 paires d'images différentes, chaque paire étant obtenue en faisant varier la perspective.

3. Procédé selon l'une quelconque des revendications précédentes, dans lequel au moins une partie des images de l'ensemble de données d'entraînement ont été crées par un logiciel de conception assisté par ordinateur.

4. Procédé selon l'une quelconque des revendications précédentes, dans lequel l'étape d'entraînement du réseau antagoniste génératif comprend
utiliser le réseau générateur pour réaliser un procédé d'entraînement et utiliser un réseau discriminateur pour évaluer si une image de sortie correspond à la sortie du réseau générateur ou à une image d'entraînement
évaluer le réseau antagoniste génératif en appliquant une entropie croisée binaire, en fournissant une valeur numérique de la similitude entre l'image de sortie et l'image d'entraînement
mettre à jour de manière itérative les paramètres du réseau générateur et les paramètres du réseau discriminateur avec chaque paire d'images de l'ensemble de données d'entraînement, jusqu'à ce que le réseau discriminateur ne puisse pas distinguer entre l'image de sortie et l'image d'entraînement.

5. Procédé selon l'une quelconque des revendications précédentes, dans lequel l'étape de traitement de la première image bidimensionnelle par le réseau antagoniste génératif comprend
adapter la taille de la première image bidimensionnelle à la taille de l'ensemble de données d'entraînement
normaliser l'image adaptée sur une carte de pixels, dans lequel la couleur de chaque pixel est normalisée sur une valeur d'une plage de normalisation, telle que [-1, 1]
diviser les données normalisées en matrices tridimensionnelles, dans lequel chaque matrice tridimensionnelle a la même taille
utiliser le réseau générateur pour obtenir une image avec le bâtiment restitué.

6. Procédé selon l'une quelconque des revendications précédentes, dans lequel le réseau générateur comprend
un bloc d'entrée
une pluralité de blocs convolutifs, comprenant une couche convolutive bidimensionnelle, une couche de normalisation par lots et leaky ReLU comme fonction d'activation avec une pente de 0,2, dans lequel les trois premiers blocs convolutifs ont un nombre croissant de neurones et le reste des blocs ont le même nombre de neurones que le troisième bloc convolutif
une pluralité de blocs deconvolutifs, comprenant une couche convolutive bidimensionnelle transposée, une couche de normalisation par lots, une couche d'abandon et leaky ReLU comme fonction d'activation, dans lequel le quatre derniers blocs ont un nombre décroissant de neurones et le reste des blocs ont le même nombre de neurones que le quatrième bloc commençant para la fin.

7. Procédé selon l'une quelconque des revendications précédentes, dans lequel le réseau discriminateur comprend
une première couche d'entrée destinée à représenter une image à partir de l'ensemble de données d'entraînement et une deuxième couche d'entrée destinée à représenter une image de sortie à partir du réseau générateur
une couche de concaténation pour mélanger la première couche d'entrée et la deuxième couche d'entrée
une pluralité de blocs convolutifs, comprenant une couche convolutive bidimensionnelle, une couche de normalisation par lots et leaky ReLU comme fonction d'activation, dans lequel les blocs convolutifs ont un nombre croissant de neurones ;
une couche convolutive bidimensionnelle avec une fonction d'activation sigmoïdale et un filtre de 4x4 avec un pas de 1
une couche de sortie comprenant une matrice de valeurs qui évaluent la possibilité pour que l'image de sortie à partir du réseau générateur corresponde à une image de l'ensemble de données d'entraînement.
